Europäisches Patentamt

European Patent Office

Office européen des brevets

(11) Numéro de publication: **0 052 046**
**B1**

(12) FASCICULE DE BREVET EUROPEEN

(45) Date de publication du fascicule du brevet:
14.03.84

(21) Numéro de dépôt: 81401711.7

(22) Date de dépôt: 27.10.81

(51) Int. Cl.³: **A 21 D 2/36**

(54) Procédé de fabrication d'un produit alimentaire et produit alimentaire obtenu.

(30) Priorité: **10.11.80 FR 8023975**

(43) Date de publication de la demande:
**19.05.82 Bulletin 82/20**

(45) Mention de la délivrance du brevet:
**14.03.84 Bulletin 84/11**

(84) Etats contractants désignés:
**BE DE GB IT NL SE**

(56) Documents cités:
**DE - B - 1 034 112**
**DE - C - 276 886**
**DE - C - 296 648**

(73) Titulaire: **M.B.E. MINOTERIE BISCOTTERIE D'ECHENON, Boîte Postale 24, F-21170 Saint Jean de Losne (FR)**

(72) Inventeur: **Cantenot, François, St. Usage, F-21170 Saint Jean De Losne (FR)**

(74) Mandataire: **Corre, Jacques Denis Paul et al, Cabinet Regimbeau 26, Avenue Kléber, F-75116 Paris (FR)**

BUNDESDRUCKEREI BERLIN

## Procédé de fabrication d'un produit alimentaire et produit alimentaire obtenu

La présente invention est relative à un procédé de fabrication d'un produit alimentaire, et à un produit alimentaire obtenu par ce procédé.

Plus précisément, la présente invention concerne la fabrication de produits apparentés aux biscottes, produits dont on connait déjà un certain nombre de variantes.

Ces variantes connues diffèrent essentiellement par le mode de cuisson du produit et par sa présentation, mais leurs goûts sont généralement très voisins car leur composition varie peu d'un produit à un autre.

En règle générale, ces produits sont réalisés par cuisson d'un mélange de farine de froment, de sucre, éventuellement de lait et de matières grasses, et de sel.

Ces produits se caractérisent par une certaine fadeur, et il est apparu judicieux de proposer des produits qui, bien qu'apparentés par leur présentation à de tels produits, présentent un goût plus attrayant, mais toutefois discret.

De façon tout à fait inattendue, il est apparu que l'on pouvait obtenir un tel goût en remplaçant une partie de la farine de froment généralement utilisée pour de tels produits par une farine obtenue par broyage de maïs grillé.

Des essais de dégustation pratiqués sur des produits obtenus en remplaçant ainsi de 10 à 60% de la farine de froment par de la farine de maïs grillé, ont permis de relever un goût particulier, distinct de celui des produits réalisés à partir d'une farine exclusivement de froment, et dans lequel on n'a détecté en rien le goût du maïs grillé; la dégustation d'un produit obtenu à partir d'une farine incluant 30% de farine de maïs grillé et 70% de farine de froment à même revélé un goût fumé tout à fait inattendu, obtenu naturellement et sans exposition du produit en cours de fabrication à un quelconque traitement tendant à lui donner ce goût; les produits obtenus respectivement à partir d'une farine incluant 30% de farine de maïs grillé, 40%, 50%, et 0% ont recueilli respectivement 85%, 81%, 81% et 78% de commentaires positifs, un bon goût ayant été signalé respectivement dans 64%, 49%, 44% et 46% des cas et un parfum signalé respectivement dans 37%, 25%, 27% et 13% des cas.

On voit que, notamment dans le cas d'un produit réalisé à partir d'une farine incluant 30% de farine de maïs grillé et 70% de farine de froment, les commentaires obtenus par le produit selon l'invention ont été nettement favorables, en comparaison d'un produit de type connu ne contenant pas de farine de maïs; ce produit connu, pourtant généralement apprécié, a été reconnu comme fade par les 2/5 de l'échantillon.

Le procédé selon l'invention, pour la fabrication d'un produit alimentaire, est caractérisé en ce que l'on réalise un mélange intime comportant, en unités de poids:

— 100 unités de farine à raison de 10 à 60 unités de farine de maïs grillé et du complément en farine de blé,
— de 1 à 5 unités de sucre,
— de 0 à 3,5 unités de lait,
— de 0 à 3,5 unités de matières grasses,
— 1 unité de sel,

et l'on façonne et cuit le mélange.

Selon un mode de mise en œuvre préféré du procédé, on façonne et cuit le mélange simultanément, en continu, par un procédé connu sous le nom d'extrusion-cuisson, de préférence à une température supérieure à 100°C, avant un refroidissement rapide, immédiatement après extrusion, qui provoque l'apparition d'alvéoles dans le produit par condensation de l'eau vaporisée à la cuisson.

Avantageusement, le produit est en suite grillé, de façon à être rendu friable et à présenter une couleur dorée agréable.

D'autres caractéristiques et avantages du procédé selon l'invention et du produit obtenu ressortiront de la description ci-dessous, relative à un mode de mise en œuvre.

Selon ce mode de mise en œuvre préféré, on commence par mélanger, en unités de poids et par exemple en kilos:

— 100 unités de farine à raison de 10 à 60 unités de farine de maïs grillé et du complément en farine de blé, et de préférence à raison de 30 à 50 unités de farine de maïs grillé et du complément en farine de blé,
— de 1 à 5 unités de sucre, et de préférence 2,5 unités de sucre,
— de 0 à 3,5 unités de lait, et de préférence 2,5 unités de lait, de préférence écrémé,
— 1 unité de sel,

ceci de façon homogène, avant d'ajouter au mélange ainsi obtenu les matières grasses, à raison de 0 à 3,5 unités en poids, la valeur préférée étant de 2 unités.

La farine utilisée, qu'il s'agisse de la farine de blé ou de la farine de maïs grillé, présente une granulométrie traditionnelle; on a obtenu de bons résultats avec une farine de type 55, cette indication étant donnée à titre d'exemple.

Le mélange est effectué dans un mélangeur présentant une hélice à rotation rapide, muni d'un dispositif émotteur, afin que la matière grasse, de préférence végétale du type »huile«, diffuse régulièrement parmi les autres constituants; à sa sortie du mélangeur, le mélange se présente comme sec.

Le mélange est alors façonné et cuit, de préférence par le procédé connu d'extrusion-cuisson, de bons résultats ayant été obtenus aux essais au moyen d'un cuiseur-extrudeur diffusé par la firme »CREUSOT-LOIRE«.

Cet appareil, qui ne constitue qu'un exemple de dispositif susceptible d'être utilisé pour la mise en œuvre du procédé selon l'invention, comporte, à l'intérieur d'un fourreau chauffé par des inducteurs, 2 vis d'Archimède dont les axes sont parallèles et qui tournent dans le même sens, les filets de ces deux vis s'encastrant l'un dans l'autre et présentant un pas se réduisant jusqu'à s'inverser d'une zone d'entrée de la matière à extruder dans le fourreau jusqu'à une zone de sortie de cette matière; au niveau de cette zone de sortie, le filet des vis présente des échancrures entre lesquelles le produit doit passer avant de traverser une tête d'extrusion comportant une ou plusieurs filières qui façonnent le produit.

Selon l'invention, la température à laquelle le produit est porté à l'intérieur du fourreau du cuiseur-extrudeur est supérieure à 100° C, et de préférence comprise entre 140 et 155° C, afin de provoquer la vaporisation de l'eau des constituants du mélange et la cuisson de celui-ci; à titre d'exemple, on a obtenu de bons résultats aux essais avec un débit d'extrusion de l'ordre de 300 kilos par heure, la tête d'extrusion comportant 4 filières de 4 cm de haut sur 2 mm d'épaisseur, façonnant le produit en 4 bandes présentant transversalement ces dimensions; de façon générale, on préfèrera façonner et cuire le mélange sous forme d'une bande plate d'une épaisseur inférieure à 10 mm.

A sa sortie de l'appareil, et plus précisément de la tête d'extrusion, le produit est refroidi rapidement, par exemple par sortie à l'air libre, ce qui provoque l'apparition d'alvéoles à cœur du fait que la vapeur d'eau qui s'était formée lors de la cuisson, et qui ne pouvait s'échapper du fait des conditions de pression règnant dans le mélange en cours de cuisson à l'intérieur du fourreau, se condense brutalement; en outre, le changement dans les conditions de pression à la surface du produit du fait de sa sortie du fourreau à l'air libre provoque un échappement de la vapeur d'eau en surface, ce qui produit également des alvéoles en surface.

Ensuite, le produit est grillé au four, ce qui lui donne une couleur agréable et lui communique une friabilité; à titre d'exemple, on a obtenu de bons résultats en faisant ainsi subir à un produit en forme de bande d'une épaisseur de 2 mm sur une largeur de 4 cm la traversée en 14 secondes d'un four de 6 m de long porté à une température de l'ordre de 350 à 380° C.

A sa sortie du four de grillage, le produit est refroidi par des ventilateurs.

Selon un mode de mise en œuvre préféré du procédé, notamment lorsque le produit est réalisé en continu par exemple par extrusion-cuisson, notamment sous la forme d'une bande plate, le tronçonnage du produit nécessaire à son conditionnement après grillage est préparé avant ce grillage, c'est-à-dire dans l'exemple choisi après le refroidissement à la sortie du cuiseur-extrudeur et avant l'entrée dans le four de grillage; à cet effet, on pratique dans le produit notamment en bande des entailles généralement transversales, et le cas échéant également longitudinales, sur une partie de son épaisseur, au moyen de couteaux; à sa sortie du four de grillage et après refroidissement, le produit est soumis à l'action de brosses qui provoquent à sa cassure suivant les entailles.

De façon connue en soi, le produit est ensuite conditionné sous pellicule imperméale puis sous carton.

**Revendications**

1. Procédé de fabrication d'un produit alimentaire apparenté aux biscottes, caractérisé en ce que l'on réalise un mélange intime comportant, en unités de poids:

— 100 unités de farine à raison de 10 à 60 unités de farine obtenue par broyage de maïs grillé et du complément en farine de blé,
— de 1 à 5 unités de sucre,
— de 0 à 3,5 unités de lait,
— de 0 à 3,5 unités de matières grasses,
— 1 unité de sel,

et l'on façonne et cuit le mélange.

2. Procédé selon la revendication 1, caractérisé en ce que l'on réalise le mélange en mélangeant, en premier lieu, la farine, le sucre, le lait, le sel, puis en second lieu l'ensemble de ces ingrédients avec les matières grasses.

3. Procédé selon l'une quelconque des revendications précédentes, caractérisé en ce que les 100 unités de farine comportent de préférence de 30 à 50 unités de farine de maïs grillé et le complément en farine de blé.

4. Procédé selon la revendication 3, caractérisé en ce que les 100 unités de farine comportent de préférence 30 unités de farine de maïs grillé et 70 unités de farine de blé.

5. Procédé selon la revendication 4, caractérisé en ce que le mélange comporte de préférence 2,5 unités de sucre, 2,5 unités de lait écrémé, 2 unités de matière grasse, et une unité de sel.

6. Procédé selon l'une quelconque des revendications précédentes, caractérisé en ce que le lait est un lait écrémé.

7. Procédé selon l'une quelconque des revendications précédentes, caractérisé en ce que les matières grasses sont végétales, dites »huile«.

8. Procédé selon l'une quelconque des revendications précédentes, caractérisé en ce que l'on façonne et cuit le mélange simultanément en continu, par extrusion-cuisson.

9. Procédé selon la revendication 8, caractérisé en ce que l'on extrude le mélange à une température supérieure à 100° C et en ce qu'on le refroidit rapidement immédiatement après extrusion pour provoquer l'apparition d'alvéoles.

10. Procédé selon l'une quelconque des revendications précédentes, caractérisé en ce que l'on grille ensuite le produit obtenu pour le rendre friable et le colorer, puis on le refroidit.

11. Procédé selon l'une quelconque des revendications précédentes, caractérisé en ce que l'on façonne et cuit le mélange sous forme d'une bande plate.

12. Procédé selon la revendication 11, caractérisé en ce que ladite bande présente une épaisseur inférieure à 10 mm.

13. Procédé selon la revendication 10 et l'une quelconque des revendications 11 et 12, caractérisé en ce que l'on pratique dans la bande des entailles sur une partie de son épaisseur avant grillage, et en ce que l'on provoque sa cassure suivant les entailles après grillage.

14. Produit alimentaire obtenu par un procédé selon l'une quelconque des revendications précédentes.

## Patentansprüche

1. Verfahren zur Herstellung eines Nahrungsmittels in Form gerösteten Gebäcks, dadurch gekennzeichnet, daß eine innig vermischte Mischung hergestellt wird, welche in Gewichtseinheiten aufweist:

— 100 Einheiten Mehl im Verhältnis von 10 bis 60 Einheiten Mehl aus gemahlenem, geröstetem Mais und als Ergänzung Weizenmehl,
— 1 bis 5 Einheiten Zucker,
— 0 bis 3,5 Einheiten Milch,
— 0 bis 3,5 Einheiten Fettmaterialien,
— 1 Einheit Salz,

und daß die Mischung geformt und gebacken wird.

2. Verfahren nach Anspruch 1, dadurch gekennzeichnet, daß die Mischung hergestellt wird zuerst durch Vermengen des Mehls, des Zuckers, der Milch, des Salzes und anschließend zweitens des Gemenges dieser Bestandteile mit den Fettmaterialien.

3. Verfahren nach irgendeinem der vorhergehenden Ansprüche, dadurch gekennzeichnet, daß die 100 Einheiten Mehl vorzugsweise 30 bis 50 Einheiten Mehl aus geröstetem Mais und als Ergänzung Weizenmehl enthalten.

4. Verfahren nach Anspruch 3, dadurch gekennzeichnet, daß die 100 Einheiten Mehl vorzugsweise 30 Einheiten Mehl aus geröstetem Mais und 70 Einheiten Weizenmehl enthalten.

5. Verfahren nach Anspruch 4, dadurch gekennzeichnet, daß die Mischung vorzugsweise 2,5 Einheiten Zucker, 2,5 Einheiten Magermilch, 2 Einheiten Fettmaterialien und 1 Einheit Salz enthält.

6. Verfahren nach irgendeinem der vorhergehenden Ansprüche, dadurch gekennzeichnet, daß die Milch eine Magermilch ist.

7. Verfahren nach irgendeinem der vorhergehenden Ansprüche, dadurch gekennzeichnet, daß die Fettmaterialien pflanzlich, Öl genannt, sind.

8. Verfahren nach irgendeinem der vorhergehenden Ansprüche, dadurch gekennzeichnet, daß die Mischung gleichzeitig fortlaufend durch Spritzformen geformt und gebacken wird.

9. Verfahren nach Anspruch 8, dadurch gekennzeichnet, daß die Mischung bei einer Temperatur oberhalb 100° C extrudiert und unmittelbar nach dem Extrudieren schnell abgekühlt wird, um das Auftreten von Hohlräumen hervorzurufen.

10. Verfahren nach irgendeinem der vorhergehenden Ansprüche, dadurch gekennzeichnet, daß das erhaltene Produkt daraufhin geröstet wird, um es krümelig zu machen und zu färben, und daß es dann abgekühlt wird.

11. Verfahren nach irgendeinem der vorhergehenden Ansprüche, dadurch gekennzeichnet, daß die Mischung geformt und gebacken wird in der Form eines flachen Bandes.

12. Verfahren nach Anspruch 11, dadurch gekennzeichnet, daß das genannte Band eine Dicke geringer als 10 mm aufweist.

13. Verfahren nach Anspruch 10 und einem der Ansprüche 11 und 12, dadurch gekennzeichnet, daß in dem Band Einschnitte auf einem Teil seiner Dicke vor dem Rösten angebracht werden, und daß nach dem Rösten sein Bruch entlang den Einschnitten durchgeführt wird.

14. Nahrungsmittel, welches durch ein Verfahren nach irgendeinem der vorhergehenden Ansprüche hergestellt ist.

## Claims

1. Process for the preparation of a foodstuff similar to biscottes, characterised in that an intimate mixture is made having, in units of weight:

— 100 units of flour in the ratio of 10 to 60 units of flour obtained by grinding roasted maize and the balance in wheat flour,
— 1 to 5 units of sugar,
— 0 to 3.5 units of milk,
— 0 to 3.5 units of fats,
— 1 unit of salt,

the mixture is shaped and cooked.

2. Process according to claim 1, characterised in that the mixture is made by mixing, in the first place, the flour, the sugar, the milk, the salt, and then in the second place the mixture of these ingredients with the fats.

3. Process according to either of the preceding claims, characterised in that the 100 units of flour have preferably 30 to 50 units of flour of roasted maize and the balance in wheat flour.

4. Process according to claim 3, characterised in that the 100 units of flour preferably have 30 units of flour of roasted maize and 70 units of wheat flour.

5. Process according to claim 4, characterised in that the mixture preferably has 2.5 units of sugar, 2.5 units of skimmed milk, 2 units of fat, and 1 unit of salt.

6. Process according to any one of the preceding claims, characterised in that the milk is a skimmed milk.

7. Process according to any one of the preceding claims, characterised in that the fats are vegetable fats, known as »oil«.

8. Process according to any one of the preceding claims, characterised in that the mixture is shaped and cooked simultaneously and continuously, by extrusion cooking.

9. Process according to claim 8, characterised in that the mixture is extruded at a temperature above 100°C and in that it is rapidly cooled immediately after extrusion for provoking the appearance of cells.

10. Process according to any one of the preceding claims, characterised in that the product obtained is then grilled for rendering it fryable and for colouring it, and then it is cooled.

11. Process according to any one of the preceding claims, characterised in that the mixture is shaped and cooked in the form of a flat strip.

12. Process according to claim 11, characterised in that the said strip has a thickness less than 10 mm.

13. Process according to claim 10 and either of claims 11 and 12, characterised in that notches are made in the strip through part of its thickness before grilling, and in that its breakage following the notches is provoked after grilling.

14. A foodstuff obtained by the process according to any one of the preceding claims.